# FASCICULE DE BREVET EUROPEEN

(11) **EP 1 097 854 B1**
(45) Date de publication et mention de la délivrance du brevet: **12.05.2004**
(21) Numéro de dépôt: 00402982.3
(22) Date de dépôt: 26.10.2000
(51) Int. Cl.: B61H 1/00, B61F 5/50, F16D 65/04, F16D 65/06

(54) **Ensemble de freinage pour roue de véhicule ferroviaire et bogie de véhicule ferroviaire pourvu d'un tel ensemble**
Bremseinheit für ein Schienenfahrzeug und Drehgestell eines Schienenfahrzeuges mit dieser Vorrichtung
Brake assembly for a rail vehicle and bogie provided with such assembly

(30) Priorité: 03.11.1999 FR 9914014
(43) Date de publication de la demande: 09.05.2001
(73) Titulaire: Alstom, 75116 Paris (FR); Regie Autonome des Transports Parisiens RATP, 75012 Paris (FR)
(72) Inventeur: Drobecq, Vincent, 59163 Conde S/Escaut (FR)
(74) Mandataire: de Lambilly Delorme, Marie Pierre

(56) Documents cités:
- EP-A- 0 844 160
- DE-A- 3 425 249

## Description

La présente invention concerne un ensemble de freinage pour roue de véhicule ferroviaire, ainsi qu'un bogie de véhicule ferroviaire pourvu d'un tel ensemble de freinage.

De façon connue, un tel ensemble de freinage comprend un organe de support, réalisé habituellement en un matériau métallique. Cet organe de support est mobile sous l'effet de moyens d'actionnement, tels que des vérins, selon une direction qui peut être parallèle ou perpendiculaire à l'axe de rotation de la roue.

Cet ensemble de freinage comporte également une garniture de friction, qui peut être réalisée en un matériau métallique, composite ou encore en bois. Cette garniture, qui est assujettie de façon classique par des moyens mécaniques à l'organe de support, est destinée à entrer en contact, lors du processus de freinage, avec la roue proprement dite ou avec un élément solidaire de cette dernière, tel qu'un disque.

Un tel ensemble de freinage est par exemple décrit dans le document DE-A-3 425 249.

Les ensembles de freinage connus présentent cependant un inconvénient. En effet, lors de la fin du processus de freinage, il apparaît un phénomène dit de crissement, qui se traduit par l'apparition d'un bruit élevé. Une telle pollution sonore se révèle particulièrement désagréable pour les utilisateurs du véhicule ferroviaire, ainsi que pour les personnes situées à proximité immédiate de ce dernier.

Afin de pallier cet inconvénient, l'invention se propose de réaliser un ensemble de freinage qui, tout en assurant un freinage fiable du véhicule ferroviaire qu'il équipe, permette, dans une large mesure, de réduire les phénomènes sonores intervenant lors de la fin du processus de freinage.

A cet effet, elle a pour objet un ensemble de freinage pour roue de véhicule de transport ferroviaire, comprenant des moyens d'actionnement, notamment un vérin, un support mobile sous l'action desdits moyens d'actionnement et une garniture de friction portée par ledit support mobile et destinée à entrer en contact avec ladite roue ou avec un élément auxiliaire solidaire de ladite roue, caractérisé en ce que cet ensemble de freinage comprend en outre une zone intermédiaire d'absorption des vibrations, interposée entre ledit support et ladite garniture de friction.

Selon d'autres caractéristiques de l'invention :
- il est prévu des premiers et seconds moyens de fixation distincts, d'une part de la zone intermédiaire au support, et d'autre part de la zone intermédiaire à la garniture de friction ;
- ladite zone intermédiaire comporte au moins une couche d'absorption des vibrations ;
- ladite zone intermédiaire comprend un insert métallique central, au moins des première et seconde couches d'absorption des vibrations séparant d'une part ledit insert et d'autre part respectivement ledit support et ladite garniture ;
- la ou chaque couche d'absorption des vibrations est réalisée en un élastomère ;
- chacun des premiers et seconds moyens de fixation comprend un organe de fixation, solidaire de la zone intermédiaire, et au moins un élément de fixation, notamment une vis, assurant l'assujettissement dudit organe de fixation sur le support ou sur la garniture de friction ;
- l'organe de fixation est une plaque métallique intercalée entre la zone intermédiaire et le support ou la garniture de friction ;
- la zone intermédiaire est collée à chaque organe de fixation ;
- la zone intermédiaire est moulée sur chaque organe de fixation ;
- la surface de chaque organe de fixation adjacente à la zone intermédiaire est pourvue d'au moins un renfoncement de réception de ladite zone intermédiaire.

L'invention a également pour objet un bogie de véhicule ferroviaire, comprenant des roues et au moins un ensemble de freinage pour au moins une desdites roues, caractérisé en ce que le ou chaque ensemble de freinage est tel que défini ci-dessus.

L'invention va être décrite dans ce qui suit, en référence aux dessins annexés, donnés uniquement à titre d'exemples non limitatifs et dans lesquels :
- la figure 1 est une vue en coupe longitudinale d'un ensemble de freinage conforme à l'invention et d'une roue d'un véhicule de transport ferroviaire associée à cet ensemble de freinage ; et
- la figure 2 est une vue en coupe analogue à la figure 1, illustrant un ensemble de freinage conforme à un deuxième mode de réalisation de l'invention.

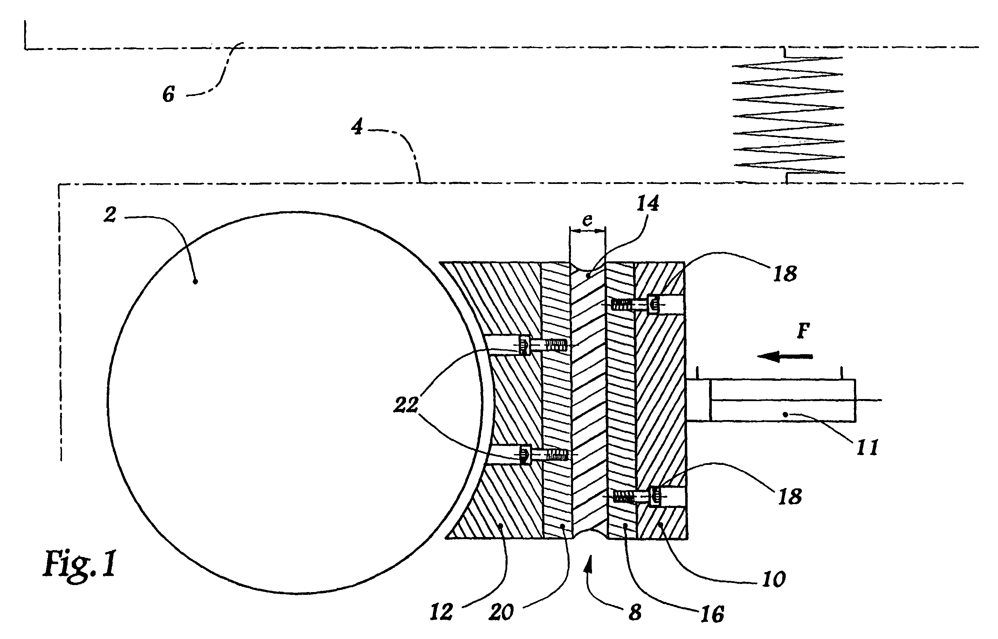

La figure 1 représente une roue 2 dont est pourvue un bogie 4 équipant un véhicule de transport ferroviaire 6, ce bogie 4 et ce véhicule 6 étant représentés de manière schématique.

Le véhicule 6 est muni d'un ensemble de freinage, désigné dans son ensemble par la référence 8, adapté pour ralentir, voire arrêter, le mouvement de rotation de la roue 2. Cet ensemble de freinage comprend, de façon connue, un support 10 métallique, mobile sous l'action d'un vérin 11, selon un axe perpendiculaire à l'axe de rotation de la roue 2. Cet axe de déplacement du support est matérialisé par la flèche F.

L'ensemble de freinage 8 comprend également une garniture de friction qui, dans l'exemple représenté, est un sabot 12 dont la face opposée au support 10 possède un profil conjugué de celui de la roue.

Une couche 14, réalisée en un matériau absorbant les vibrations, est interposée entre les faces en regard du support 10 et du sabot 12. Cette couche 14, qui constitue une zone intermédiaire de l'ensemble de freinage 8, est par exemple réalisée en un matériau élastomère. Pour que cette couche puisse remplir sa fonction de transmission des efforts, sa dureté doit être supérieure à 80 Shore et son épaisseur e par exemple comprise entre 5 et 10 mm.

La fixation de la couche absorbante 14 sur le support 10 est réalisée par l'intermédiaire de premiers moyens de fixation. Ces derniers comprennent une plaque métallique 16, formant organe de fixation, qui est assujettie sur le support 10 par l'intermédiaire de vis 18, formant éléments de fixation. La couche 14 est solidarisée à la plaque métallique 16 par collage.

La fixation de la couche 14 sur le sabot 12 est assurée par l'intermédiaire de seconds moyens de fixation, qui sont différents des premiers moyens de fixation décrits ci-dessus. Ces seconds moyens de fixation comprennent une plaque métallique 20, formant organe de fixation, qui est assujettie sur le sabot 12 par l'intermédiaire de vis 22, formant éléments de fixation. La couche 14 est solidarisée à la plaque 20 par collage.

On peut remplacer les vis 18, 22 par des moyens de fixation par collage. A cet effet, on interpose des films de colle d'une part entre les faces en regard du support 10 et de la plaque 16, et d'autre part entre les faces en regard du sabot 12 et de la plaque 20.

Il est également possible de remplacer la couche unique 14 par une zone intermédiaire composite, non représentée. Cette dernière comprend alors un insert métallique central, réalisé par exemple en acier, de part et d'autre duquel sont disposées des première et seconde couche d'absorption des vibrations, analogues à la couche 14 de la figure 1. Ces couches absorbantes sont fixées par collage sur les plaques qui lui sont adjacentes.

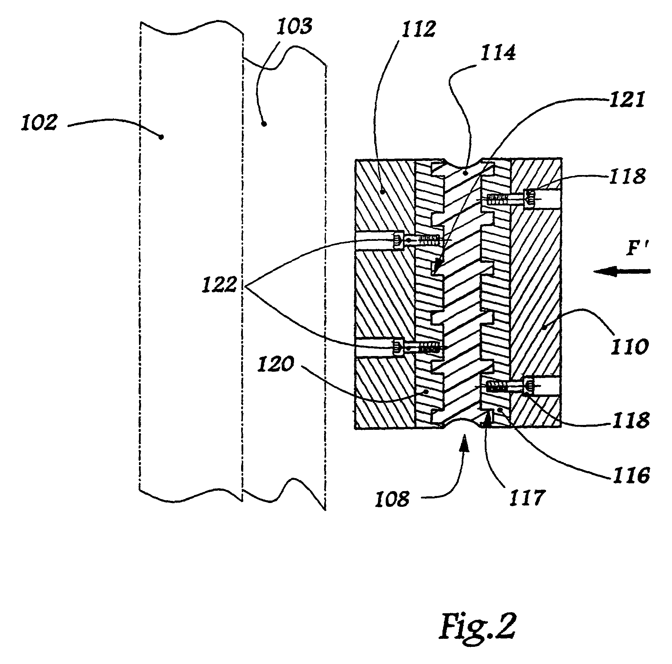

La figure 2 représente un autre mode de réalisation de l'invention, dans lequel la roue 102 est solidaire d'un disque de freinage 103. L'ensemble de freinage 108 comprend un support 110, ainsi qu'une garniture 112 de friction, réalisés de façon classique, entre lesquels est interposée une couche absorbante 114 analogue à celle 14 de la figure 1. La face de la garniture 112 opposée au support 110 est plane, de manière à prendre appui contre la face en regard du disque 103.

L'ensemble de freinage 108 est mobile, sous l'action de vérins non représentés, selon une direction matérialisée par la flèche F', à savoir parallèle à l'axe de rotation de la roue 102.

La couche 114 est fixée au support 110 par l'intermédiaire de premiers moyens de fixation, qui comprennent une plaque métallique 116, formant organe de fixation, assujettie au support 110 par des vis 118, formant éléments de fixation.

La surface de la plaque 116 adjacente à la couche 114 est crantée, de sorte qu'elle présente des renfoncements 117, ou logements, permettant le surmoulage de la couche 114 sur la plaque 116.

La couche 114 est fixée à la garniture 112 par l'intermédiaire de seconds moyens de fixation, qui comprennent une plaque 120, formant organe de fixation, assujettie à la garniture 112 par l'intermédiaire de vis 122, formant éléments de fixation.

La surface de cette plaque 120 adjacente à la couche 114 est crantée, de sorte qu'elle présente des renfoncements 121, ou logements, permettant le surmoulage de la couche 114 sur la plaque 120.

L'invention permet d'atteindre les objectifs précédemment mentionnés, puisqu'il a été constaté que l'utilisation de l'ensemble de freinage conforme à l'invention permet de réduire de façon notable les phénomènes de crissement intervenant en fin de freinage. En effet, l'interposition d'une zone d'absorption des vibrations entre le support et la garniture de freinage confère une composante d'amortissement des vibrations, selon une direction globalement parallèle à l'effort de freinage, et assure une réduction du bruit.

L'emploi de moyens de fixation distincts, c'est-à-dire ne reliant pas physiquement, au travers de la zone absorbante, le support et la garniture de freinage, est avantageux. En effet, il assure à l'ensemble de freinage de l'invention une rigidité tangentielle réduite par rapport à l'art antérieur. Ceci confère une composante supplémentaire d'absorption des vibrations, globalement perpendiculaire à l'effort de freinage.

L'ensemble de freinage de l'invention est simple et peu onéreux. Il entraîne peu de modifications par rapport à un ensemble de l'art antérieur, aussi bien sur le plan structurel que sur le plan géométrique. Enfin, il n'induit sensiblement pas de surplus de maintenance, par rapport à un ensemble de freinage connu.

## Revendications

1. Ensemble de freinage (8; 108) pour roue (2 ; 102) de véhicule de transport ferroviaire (6), comprenant des moyens d'actionnement, notamment un vérin (11), un support (10 ; 110) mobile sous l'action desdits moyens d'actionnement et une garniture de friction (12 ; 112) portée par ledit support mobile et destinée à entrer en contact avec ladite roue (2) ou avec un élément auxiliaire (103) solidaire de ladite roue (102), **caractérisé en ce que** cet ensemble de freinage (8 ; 108) comprend en outre une zone intermédiaire (14 ; 114) d'absorption des vibrations (14 ; 114), interposée entre ledit support (10 ; 110) et ladite garniture de friction (12 ; 112).

2. Ensemble selon la revendication 1, **caractérisé en ce qu'**il est prévu des premiers (16, 18 ; 116, 118) et seconds (20, 22 ; 120, 122) moyens de fixation distincts, d'une part de la zone intermédiaire (14 ; 114) au support, et d'autre part de la zone intermédiaire (14 ; 114) à la garniture de friction.

3. Ensemble selon la revendications 1 ou 2, **caractérisé en ce que** ladite zone intermédiaire comporte au moins une couche d'absorption des vibrations (14 ; 114).

4. Ensemble selon la revendication 3, **caractérisé en ce que** ladite zone intermédiaire comprend un insert métallique central, au moins des première et seconde couches d'absorption des vibrations séparant d'une part ledit insert et d'autre part respectivement ledit support et ladite garniture.

5. Ensemble selon la revendication 3 ou 4, **caractérisé en ce que** la ou chaque couche d'absorption des vibrations (14 ; 114) est réalisée en un élastomère.

6. Ensemble selon l'une des revendications 2 à 5, **caractérisé en ce que** chacun des premiers et seconds moyens de fixation comprend un organe de fixation (16, 20 ; 116, 120), solidaire de la zone intermédiaire (14 ; 114), et au moins un élément de fixation, notamment une vis (18, 22 ; 118, 122), assurant l'assujettissement dudit organe de fixation (16, 20 ; 116, 120) sur le support (10 ; 110) ou sur la garniture de friction (12 ; 112).

7. Ensemble selon la revendication 6, **caractérisé en ce que** ledit organe de fixation est une plaque métallique (16, 20 ; 116, 120) intercalée entre la zone intermédiaire (14 ; 114) et le support (10 ; 110) ou la garniture de friction (12 ; 112).

8. Ensemble selon l'une des revendications 6 ou 7, **caractérisé en ce que** la zone intermédiaire (14) est collée à chaque organe de fixation (16, 20).

9. Ensemble selon l'une des revendications 6 ou 7, **caractérisé en ce que** la zone intermédiaire (114) est moulée sur chaque organe de fixation (116, 120).

10. Ensemble selon la revendication 9, **caractérisé en ce que** la surface de chaque organe de fixation (116, 120) adjacente à la zone intermédiaire est pourvue d'au moins un renfoncement (117, 121) de réception de ladite zone intermédiaire (114).

11. Bogie (4) de véhicule ferroviaire (6), comprenant des roues (2) et au moins un ensemble de freinage (8) pour au moins une desdites roues, **caractérisée en ce que** le ou chaque ensemble de freinage (8) est conforme à l'une quelconque des revendications précédentes.

## Claims

1. Brake assembly (8; 108) for the wheel (2; 102) of a rail transport vehicle (6), comprising actuating means, particularly a cylinder actuator (11), a support (10; 110) that can move under the action of the said actuating means and a friction lining (12; 112) borne by the said mobile support and intended to come into contact with the said wheel (2) or with an auxiliary element (103) secured to the said wheel (102), **characterized in that** this brake assembly (8; 108) further comprises an intermediate vibration-absorption region (14; 114) inserted between the said support (10; 110) and the said friction lining (12; 112).

2. Assembly according to Claim 1, **characterized in that** there are first (16, 18; 116, 118) and second (20, 22; 120, 122) distinct fastening means, on the one hand, for fastening the intermediate region (14; 114) to the support and, on the other hand, for fastening the intermediate region (14; 114) to the friction lining.

3. Assembly according to Claim 1 or 2, **characterized in that** the said intermediate region comprises at least one vibration-absorption layer (14; 114).

4. Assembly according to Claim 3, **characterized in that** the said intermediate region comprises a central metal insert, at least a first vibration-absorption layer and a second vibration-absorption layer, one of them separating the said insert from the said support and the other separating the said insert from the said lining.

5. Assembly according to Claim 3 or 4, **characterized in that** the or each vibration-absorption layer (14; 114) is made of an elastomer.

6. Assembly according to Claims 2 to 5, **characterized in that** each of the first and second fastening means comprises a fastening member (16, 20; 116, 120) secured to the intermediate region (14; 114), and at least one fastener, particularly a screw (18, 22; 118, 122), for securing the said fastening member (16, 20; 116, 120) to the support (10; 110) or to the friction lining (12; 112).

7. Assembly according to Claim 6, **characterized in that** the said fastening member is a metal plate (16, 20; 116, 120) inserted between the intermediate region (14; 114) and the support (10; 110) or the friction lining (12; 112).

8. Assembly according to either of Claims 6 and 7, **characterized in that** the intermediate region (14) is bonded to each fastening member (16, 20).

9. Assembly according to either of Claims 6 and 7, **characterized in that** the intermediate region (114) is molded over each fastening member (116, 120).

10. Assembly according to Claim 9, **characterized in that** that surface of each fastening member (116, 120) adjacent to the intermediate region has at least one depression (117, 121) for housing the said intermediate region (114).

11. Bogie (4) for a railway vehicle (6), comprising wheels (2) and at least one brake assembly (8) for at least one of the said wheels, **characterized in that** the or each brake assembly (8) is an assembly according to any one of the preceding claims.

## Patentansprüche

1. Bremseinheit (8 ; 108) für ein Rad (2; 102) eines Schienentransportfahrzeugs (6), enthaltend Betätigungsmittel, insbesondere einen Zylinder (11), eine unter der Einwirkung der Betätigungsmittel bewegliche Halterung (10; 110) und einen Reibbelag (12; 112), der von der beweglichen Halterung gehaltert ist und dazu bestimmt ist, mit dem Rad (2) oder mit einem mit dem Rad (102) einstückigen Hilfselement (103) in Kontakt zu treten, **dadurch gekennzeichnet, dass** diese Bremseinheit (8; 108) des weiteren zum Absorbieren von Schwingungen (14; 114) einen Zwischenbereich (14; 114) umfaßt, der zwischen der Halterung (10; 110) und dem Reibbelag (12; 112) angeordnet ist.

2. Einheit nach Anspruch 1, **dadurch gekennzeichnet, dass** verschiedene erste (16, 18; 116, 118) und zweite (20, 22; 120, 122) Befestigungsmittel, einerseits für den Zwischenbereich (14; 114) an der Halterung und andererseits für den Zwischenbereich (14; 114) am Reibbelag vorgesehen sind.

3. Einheit nach Anspruch 1 oder 2, **dadurch gekennzeichnet, dass** der Zwischenbereich wenigstens eine Absorptionsschicht für Schwingungen (14; 114) umfaßt.

4. Einheit nach Anspruch 3, **dadurch gekennzeichnet, dass** der Zwischenbereich einen zentralen Metalleinsatz umfaßt, wobei wenigstens eine erste und eine zweite Absorptionsschicht für Schwingungen einerseits den Einsatz und andererseits jeweils die Halterung und den Belag voneinander trennen.

5. Einheit nach Anspruch 3 oder 4, **dadurch gekennzeichnet, dass** die bzw.jede Absorptionsschicht für Schwingungen (14; 114) aus Elastomer hergestellt ist.

6. Einheit nach einem der Ansprüche 2 bis 5, **dadurch gekennzeichnet, dass** jedes der ersten und der zweiten Befestigungsmittel ein Befestigungsorgan (16, 20; 116,120) umfaßt, das mit dem Zwischenbereich (14; 114) einstückig ist, sowie wenigstens ein Befestigungselement, insbesondere eine Schraube (18, 22; 118, 122) das die feste Verbindung des Befestigungsorgans (16, 20; 116, 120) mit der Halterung (20; 110) oder mit dem Reibbelag (12; 112) sicherstellt.

7. Einheit nach Anspruch 6, **dadurch gekennzeichnet, dass** das Befestigungsorgan eine Metallplatte (16, 20; 116, 120) ist, die zwischen dem Zwischenbereich (14; 114) und der Halterung (10; 110) oder dem Reibbelag (12; 112) verkeilt ist.

8. Einheit nach einem der Ansprüche 6 oder 7, **dadurch gekennzeichnet, dass** der Zwischenbereich (14) mit jedem Befestigungsorgan (16, 20) verklebt ist.

9. Einheit nach einem der Ansprüche 6 oder 7, **dadurch gekennzeichnet, dass** der Zwischenbereich (114) auf jedem Befestigungsorgan (116, 120) angeformt ist.

10. Einheit nach Anspruch 9, **dadurch gekennzeichnet, dass** die Oberfläche jedes Befestigungsorgans (116, 120), die dem Zwischenbereich benachbart ist, mit wenigstens einer Aufnahmeverstörkung (117; 121) für den Zwischenbereich (114) ausgestattet ist.

11. Drehgestell (4) eines Schienenfahrzeugs (6), umfassend Räder (2) und wenigstens eine Bremseinheit (8) für wenigstens eines der Räder, **dadurch gekennzeichnet, dass** die oder jede Bremseinheit (8) einem der vorhergehenden Ansprüche entspricht.
